# EUROPEAN PATENT APPLICATION

(11) **EP 3 547 429 A1**
(43) Date of publication of application: **02.10.2019**
(21) Application number: 17873300.2
(22) Date of filing: 19.05.2017
(51) Int. Cl.: H01M 8/0606, C25B 1/10, C25B 9/00, C25B 15/08, H01M 8/04, H01M 8/04746, H01M 8/10

(54) **REGENERATIVE FUEL CELL SYSTEM AND WATER ELECTROLYSIS SYSTEM**

(30) Priority: 25.11.2016 JP 2016228902
(71) Applicant: IHI Corporation, Tokyo 135-8710 (JP); IHI Aerospace Co., Ltd., Koto-Ku Tokyo 135-0061 (JP)
(72) Inventor: YACHI Yusaku, Tokyo 135-8710 (JP); SHINOZAKI Noboru, Tokyo 135-0061 (JP)
(74) Representative: MERH-IP Matias Erny Reichl Hoffmann Patentanwälte PartG mbB
(86) International application number: PCT/JP2017/018831
(87) International publication number: WO 2018/096713

(57) **Abstract**

A regenerative fuel cell system (100) includes: a fuel cell (1) that causes hydrogen from a hydrogen storage unit (11a) and oxygen from an oxygen storage unit (11b) to react with each other to generate electricity; a water electrolysis device (7) that electrolyze water discharged from the fuel cell (1) to produce hydrogen and oxygen; a first gas reaction device (9a) (a first reaction part) that causes the hydrogen produced by the water electrolysis device (7) and oxygen accompanying the hydrogen produced by the water electrolysis device (7) to react with each other and return the hydrogen remaining after the reaction to the hydrogen storage unit (11a); a second gas reaction device (9b) (a second reaction part) that causes the oxygen produced by the water electrolysis device (7) and hydrogen accompanying the oxygen produced by the water electrolysis device (7) to react with each other and return the oxygen remaining after the reaction to the oxygen storage unit (11b); a first valve (13a) coupled to a pipe connecting the water electrolysis device (7) and the hydrogen storage unit (11a); and a second valve (14a) coupled to a pipe connecting the water electrolysis device (7) and the oxygen storage unit (11b).

## Description

### TECHNICAL FIELD

The present disclosure relates to a regenerative fuel cell system and a water electrolysis system.

### BACKGROUND ART

Regenerative fuel cell systems include, for example, a fuel cell which generates electricity using hydrogen and oxygen, and a water electrolysis device which recovers water from gas emitted from the fuel cell to produce hydrogen and oxygen reused for generating electricity in the fuel cell. Such a regenerative fuel cell system, which is chargeable and only produces water as a by-product, can achieve energy saving and a reduction of carbon dioxide, and is therefore a promising system used in outer space or used for an aircraft, for example.

Japanese Unexamined Patent Application Publication No. 09-139217 (Patent Document 1) discloses a closed fuel cell system including a first compressor for pressurizing hydrogen produced in a water electrolysis device so as to return the hydrogen to a hydrogen tank, and a second compressor for pressurizing oxygen produced in the water electrolysis device so as to return the oxygen to an oxygen tank. These compressors restrict a reduction in size and weight of the regenerative fuel cell system and require heavy consumption of electricity, resulting in inefficiency. An example of how to deal with such problems is to cause the water electrolysis device to directly pressurize hydrogen and oxygen produced in the water electrolysis device so as to return the hydrogen and oxygen to the respective tanks without the use of these compressors.

### CITATION LIST

### PATENT LITERATURE

Patent Document 1: Japanese Unexamined Patent Application Publication No. 09-139217

### SUMMARY OF THE INVENTION

A typical water electrolysis device includes an electrolyte membrane which is a polymer membrane, an oxygen electrode arranged on one surface of the electrolyte membrane, and a hydrogen electrode arranged on the other surface of the electrolyte membrane. When a pressure inside the water electrolysis device having such a configuration is increased, a crossover phenomenon may be induced that oxygen on the oxygen electrode side passes through the electrolyte membrane to reach the hydrogen electrode or hydrogen on the hydrogen electrode side passes through the electrolyte membrane to reach the oxygen electrode. The crossover phenomenon is undesirable in view of safety, since an entry of oxygen accompanying hydrogen to the hydrogen tank or an entry of hydrogen accompanying oxygen to the oxygen tank caused by disregard of the crossover phenomenon may cause firing derived from friction or metallic contact, for example. In order to avoid such a crossover phenomenon, the thickness of the electrolyte membrane in the water electrolysis device may be increased more than the thickness in the case of using the compressors, for example. However, the electrolytic efficiency of the water electrolysis device is decreased, since a film resistance is increased as the thickness of the electrolyte membrane is increased.

An object of the present disclosure is to provide a regenerative fuel cell system and a water electrolysis system having the advantage of ensuring both safety and efficiency.

### SOLUTION TO PROBLEM

A regenerative fuel cell system according to an aspect of the present disclosure includes: a hydrogen storage unit that stores hydrogen; an oxygen storage unit that stores oxygen; a fuel cell that causes the hydrogen from the hydrogen storage unit and the oxygen from the oxygen storage unit to react with each other to generate electricity; a water electrolysis device that electrolyze water discharged from the fuel cell to produce hydrogen and oxygen; a first reaction part that causes the hydrogen produced by the water electrolysis device and oxygen accompanying the hydrogen produced by the water electrolysis device to react with each other and return the hydrogen remaining after the reaction to the hydrogen storage unit; a second reaction part that causes the oxygen produced by the water electrolysis device and hydrogen accompanying the oxygen produced by the water electrolysis device to react with each other and return the oxygen remaining after the reaction to the oxygen storage unit; a first valve coupled to a pipe connecting the water electrolysis device and the hydrogen storage unit; and a second valve coupled to a pipe connecting the water electrolysis device and the oxygen storage unit.

A water electrolysis system according to another aspect of the present disclosure includes: an introduction port from which water is externally introduced; a water electrolysis device that electrolyze the water introduced from the introduction port to produce hydrogen and oxygen; a first reaction part that causes the hydrogen produced by the water electrolysis device and oxygen accompanying the hydrogen produced by the water electrolysis device to react with each other so as to remove the oxygen; a first discharge port from which the hydrogen remaining in the first reaction part is discharged outward; a second reaction part that causes the oxygen produced by the water electrolysis device and hydrogen accompanying the oxygen produced by the water electrolysis device to react with each other so as to remove the hydrogen; a second discharge port from which the oxygen remaining the second reaction part is discharged outward; a first valve coupled to a pipe connecting the water electrolysis device and the first discharge port; and a second valve coupled to a pipe connecting the water electrolysis device and the second discharge port.

### BRIEF DESCRIPTION OF DRAWINGS

FIG. 1 is a diagram showing a configuration of a regenerative fuel cell system according to an embodiment of the present disclosure.
FIG. 2A is a diagram showing a configuration of a first gas-water separator and a first gas reaction device according to the embodiment of the present disclosure.
FIG. 2B is a diagram showing a configuration of a second gas-water separator and a second gas reaction device according to the embodiment of the present disclosure.
FIG. 3 is a diagram illustrating an operating principle of the regenerative fuel cell system according to the embodiment of the present disclosure.
FIG. 4 is a diagram showing a configuration of a water electrolysis system according to an embodiment of the present disclosure.

### DESCRIPTION OF EMBODIMENTS

Some embodiments according to the present disclosure will be described in detail below with reference to the drawings. The dimensions, materials, and other specific numerical values described in the following embodiments are shown for illustration purposes only, and the present disclosure is not limited thereto unless otherwise specified. The respective elements having substantially the same functions and structures illustrated in the description and the drawings are denoted by the same reference numerals, and overlapping explanations are not repeated below.

### (Regenerative fuel cell system)

A configuration of a regenerative fuel cell system according to an embodiment of the present disclosure is described below. The regenerative fuel cell system according to the present embodiment is presumed to generate electricity by a fuel cell particularly using pure hydrogen and pure oxygen. The regenerative fuel cell system according to the present embodiment has the advantage of storing oxygen produced by water splitting to generate electricity by the fuel cell under circumstances or in closed spaces where oxygen cannot be taken from air, such as an aircraft flying at a high altitude, a submarine traveling undersea, or a space station.

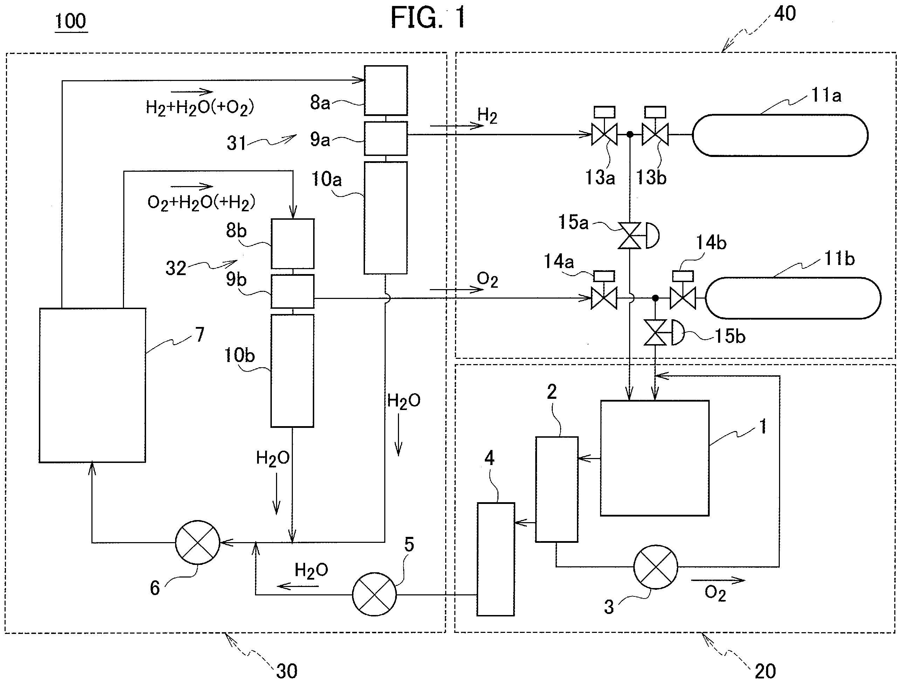

FIG. 1 is a schematic diagram showing a configuration of the regenerative fuel cell system 100 according to the present embodiment. The regenerative fuel cell system 100 includes a fuel cell unit 20, a water splitting unit 30, and a gas storage unit 40.

The fuel cell unit 20 includes a fuel cell 1, a gas-water separator 2, a circulation pump 3, and a water tank 4. The fuel cell 1 is a polymer electrolyte fuel cell (PEFC), for example, which generates electricity by a reaction using pure hydrogen and pure oxygen. In the following explanations, pure hydrogen is referred to simply as hydrogen, and pure oxygen is referred to simply as oxygen. The gas-water separator 2 separates gas after the reaction in the fuel cell 1 into oxygen and water. The circulation pump 3 recirculates the oxygen separated by the gas-water separator 2 toward an oxygen inlet of the fuel cell 1. The water tank 4 temporarily stores the water separated by the gas-water separator 2.

The water splitting unit 30 includes a water supply pump 5, a circulation pump 6, a water electrolysis device 7, a first piping system 31, and a second piping system 32.

The water supply pump 5 supplies water stored in the water tank 4 in the fuel cell unit 20 to the water electrolysis device 7 via the circulation pump 6. The circulation pump 6 circulates water supplied from the water supply pump 5 or from the first piping system 31 and the second piping system 32 inside the water splitting unit 30 through the water electrolysis device 7.

The water electrolysis device 7 electrolyzes introduced water to produce hydrogen and oxygen. The produced hydrogen and oxygen are returned to a hydrogen storage tank 11a and an oxygen storage tank 11b described in detail below.

The first piping system 31 is a piping system to which hydrogen produced in the water electrolysis device 7 is introduced. The first piping system 31 includes a first gas-water separator 8a, a first gas reaction device 9a, and a first water tank 10a. Since the hydrogen produced in the water electrolysis device 7 is mixed with water, the first gas-water separator 8a separates the mixed water from the hydrogen produced in the water electrolysis device 7.

The hydrogen produced in the water electrolysis device 7 is presumed to be accompanied by oxygen in addition to the mixed water. As used herein, the term "accompanying" refers to a state in which a main product intended to be produced is mixed with a substance not intended to be produced. In this case, the main product is hydrogen, and a substance not intended to be produced is oxygen. The hydrogen separated by the first gas-water separator 8a is supplied to the first gas reaction device 9a arranged on the downstream side of the first gas-water separator 8a. The first gas reaction device 9a causes the hydrogen produced in the water electrolysis device 7 to react with oxygen accompanying the hydrogen so as to remove the accompanying oxygen. The principle that oxygen accompanies hydrogen described herein, and the specific configurations of the first gas-water separator 8a and the first gas reaction device 9a will be described below. The hydrogen emitted from the first gas reaction device 9a is transferred to the gas storage unit 40.

The first water tank 10a temporarily stores water produced in the first gas-water separator 8a or the first gas reaction device 9a.

The second piping system 32 is a piping system to which oxygen produced in the water electrolysis device 7 is introduced. The second piping system 32 includes a second gas-water separator 8b, a second gas reaction device 9b, and a second water tank 10b. Since the oxygen produced in the water electrolysis device 7 is mixed with water, the second gas-water separator 8b separates the mixed water from the oxygen produced in the water electrolysis device 7.

The oxygen produced in the water electrolysis device 7 is also presumed to be accompanied by hydrogen in addition to the mixed water. The oxygen separated by the second gas-water separator 8b is supplied to the second gas reaction device 9b arranged on the downstream side of the second gas-water separator 8b. The second gas reaction device 9b causes the oxygen produced in the water electrolysis device 7 to react with hydrogen accompanying the oxygen so as to remove the accompanying hydrogen. The principle that hydrogen accompanies oxygen described herein, and the specific configurations of the second gas-water separator 8b and the second gas reaction device 9b will be described below. The oxygen emitted from the second gas reaction device 9b is also transferred to the gas storage unit 40.

The second water tank 10b temporarily stores water produced in the second gas-water separator 8b or the second gas reaction device 9b.

The gas storage unit 40 includes the hydrogen storage tank 11a, the oxygen storage tank 11b, two switching valves 13a and 13b and a pressure regulation valve 15a for a hydrogen piping system, and two switching valves 14a and 14b and a pressure regulation valve 15b for an oxygen piping system.

The hydrogen storage tank 11a is a storage chamber capable of storing hydrogen, which is a pressure vessel with a maximum storage pressure of about 20 to 30 MPa, for example. The switching valves 13a and 13b for the hydrogen piping system are open/close valves operable by remote control and arranged at a pipe connecting the first gas reaction device 9a and the hydrogen storage tank 11a. The pressure regulation valve 15a for the hydrogen piping system is a pressure control valve arranged at a pipe connecting a part between the two switching valves 13a and 13b and the fuel cell 1, and is preferably operable by remote control.

The oxygen storage tank 11b is a storage chamber capable of storing oxygen, which is a pressure vessel with a maximum storage pressure of about 20 to 30 MPa, for example. The switching valves 14a and 14b for the oxygen piping system are open/close valves operable by remote control and arranged at a pipe connecting the second gas reaction device 9b and the oxygen storage tank 11b. The pressure regulation valve 15b for the oxygen piping system is a pressure control valve arranged at a pipe connecting a part between the two switching valves 14a and 14b and the fuel cell 1, and is preferably operable by remote control.

Hydrogen is supplied from the hydrogen storage tank 11a to the fuel cell 1 when the switching valve 13a is closed, the switching valve 13b is open, and the pressure regulation valve 15a is regulated as appropriate. Hydrogen is injected from the first gas reaction device 9a to the hydrogen storage tank 11a when the pressure regulation valve 15a is closed and both of the switching valves 13a and 13b are open.

Similarly, oxygen is supplied from the oxygen storage tank 11b to the fuel cell 1 when the switching valve 14a is closed, the switching valve 14b is open, and the pressure regulation valve 15b is regulated as appropriate. Oxygen is injected from the second gas reaction device 9b to the oxygen storage tank 11b when the pressure regulation valve 15b is closed and both of the switching valves 14a and 14b are open.

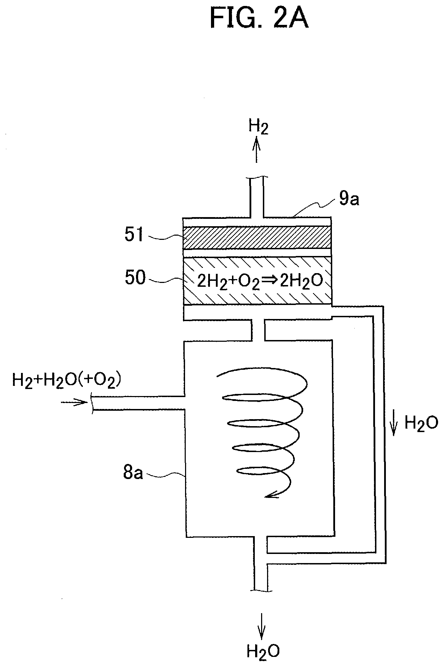

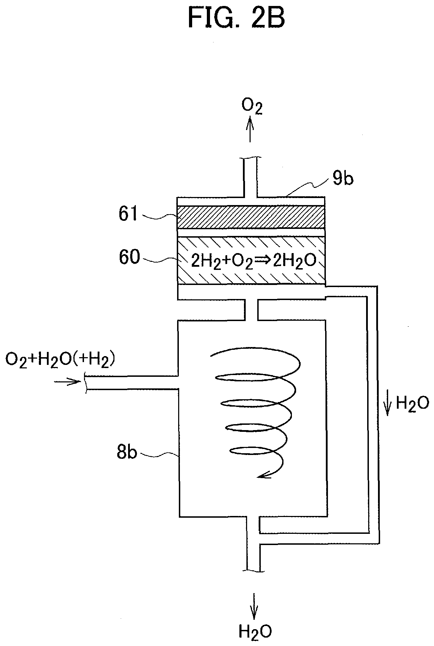

Next, the two gas-water separators 8a and 8b and the two gas reaction devices 9a and 9b included in the water splitting unit 30 are described in detail below. FIG. 2A is a schematic diagram showing a configuration of the first gas-water separator 8a and the first gas reaction device 9a included in the first piping system 31. FIG. 2B is a schematic diagram showing a configuration of the second gas-water separator 8b and the second gas reaction device 9b included in the second piping system 32. Hereinafter, gas in which hydrogen produced in the water electrolysis device 7 is mixed with water and accompanied by oxygen is referred to simply as "hydrogen-mixed gas". Similarly, gas in which oxygen produced in the water electrolysis device 7 is mixed with water and accompanied by hydrogen is referred to simply as "oxygen-mixed gas".

As shown in FIG. 2A, the first gas-water separator 8a separates water mixed with hydrogen from the hydrogen-mixed gas produced in the water electrolysis device 7 by centrifugal force, for example. The separated water is transferred to the first water tank 10a, and the hydrogen-mixed gas separated from water is transferred to the first gas reaction device 9a.

The first gas reaction device 9a further separates oxygen accompanying the hydrogen from the hydrogen-mixed gas supplied from the first gas-water separator 8a. As shown in FIG. 2A, the first gas reaction device 9a includes a first catalyst layer 50 and a first permeation layer 51. The first catalyst layer 50 is a first reaction part including a catalyst capable of causing hydrogen and oxygen to react with each other to produce water. The first catalyst layer 50 may include a platinum catalyst obtained such that fine particles of platinum are supported on a carrier of alumina or carbon, for example. The first permeation layer 51 is a layer facilitating selective permeation of hydrogen obtained such that a polymer membrane impermeable to gas is provided with fine pores at a hydrogen molecular level by high energy radiation with an electron beam, for example, so as to selectively allow only hydrogen molecules to permeate therethrough. According to this configuration, the hydrogen-mixed gas accompanied by oxygen flows in the first catalyst layer 50 so that the hydrogen and the accompanying oxygen react with each other to produce water. The produced water is transferred to the first water tank 10a and then reused. The first permeation film 51 only allows the hydrogen contained in the hydrogen-mixed gas to permeate therethrough when oxygen is still accompanying the hydrogen-mixed gas having passed through the first catalyst layer 50.

As shown in FIG. 2B, the second gas-water separator 8b separates water mixed with oxygen from the oxygen-mixed gas produced in the water electrolysis device 7 by centrifugal force, for example. The separated water is transferred to the second water tank 10b, and the oxygen-mixed gas separated from water is transferred to the second gas reaction device 9b.

The second gas reaction device 9b further separates hydrogen accompanying the oxygen from the oxygen-mixed gas supplied from the second gas-water separator 8b. As shown in FIG. 2B, the second gas reaction device 9b includes a second catalyst layer 60 and a second permeation layer 61. The second catalyst layer 60 is a second reaction part including a catalyst capable of causing hydrogen and oxygen to react with each other to produce water, as in the case of the first catalyst layer 50. The second catalyst layer 60 may also include a platinum catalyst. The second permeation layer 61 absorbs hydrogen and facilitates permeation of oxygen, and is a layer including a functional film having waterproofness and gas permeability, such as Gore-Tex (registered trademark), or a membrane for oxygen enrichment having a greater permeation speed of oxygen than other gases. According to this configuration, the oxygen-mixed gas accompanied by hydrogen flows in the second catalyst layer 60 so that the oxygen and the accompanying hydrogen react with each other to produce water. The produced water is transferred to the second water tank 10b and then reused. The second permeation film 61 mainly allows the oxygen contained in the oxygen-mixed gas to permeate therethrough when hydrogen is still accompanying the oxygen-mixed gas having passed through the second catalyst layer 60.

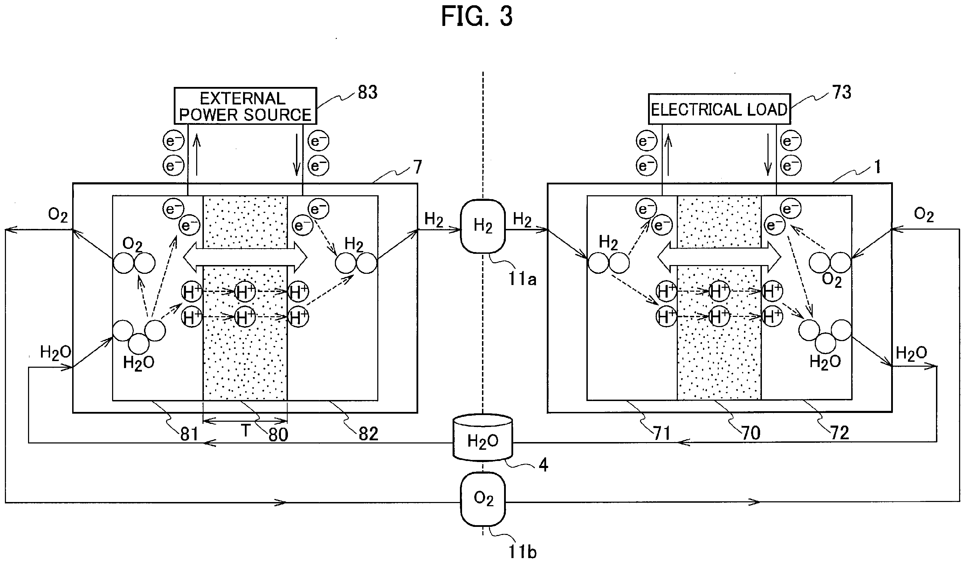

Next, an operating principle of the regenerative fuel cell system 100 is described below. FIG. 3 is a schematic diagram showing the operating principle of the regenerative fuel cell system 100, mainly illustrating a relationship between the fuel cell 1 and the water electrolysis device 7. The fuel cell 1 according to the present embodiment is presumed to be a polymer electrolyte fuel cell. The polymer electrolyte fuel cell uses a polymer membrane having ion conductivity as an electrolyte. The fuel cell 1 includes an electrolyte membrane 70 which is a polymer electrolyte membrane, an anode 71 which is a fuel electrode, and a cathode 72 which is an oxygen electrode.

Hydrogen supplied to the anode 71 is caused to undergo a reaction according to the following equation (1) so as to be turned into protons (H⁺) and electrons (e⁻):

H2 → 2H⁺ + 2e⁻ ... (1)

The protons pass through the electrolyte membrane 70 to move to the cathode 72, while the electrons pass through a conductive wire to move to the cathode 72.

The protons flowing through the electrolyte membrane 70 and the electrons flowing through the conductive wire are caused to react with oxygen in the cathode 72 so as to produce water according to the following equation (2):

4H⁺ + O₂ + 4e⁻ → 2H₂O ... (2)

The conductive wire through which the electrons pass serves as an electrical load 73, so that the fuel cell 1 can generate electricity. The fuel cell 1 according to the present embodiment uses pure hydrogen and pure oxygen, as described above. Since the fuel cell 1 causes pure hydrogen and pure oxygen to react with each other to produce pure water in accordance with the equations (1) and (2), the regenerative fuel cell system 100 reusing pure water contributes to energy saving and a reduction in carbon dioxide.

The water electrolysis device 7 has a configuration similar to the fuel cell 1, and includes an electrolyte membrane 80 which is a polymer electrolyte membrane, an anode 81, and a cathode 82. A voltage is applied between the anode 81 and the cathode 82 by an external power source 83, so as to induce a reaction reverse to that in the fuel cell 1 according to the equations (1) and (2) to produce hydrogen and oxygen in the water electrolysis device 7. The regenerative fuel cell system 100 is thus configured such that the water electrolysis device 7 uses water produced in the fuel cell 1 to produce hydrogen and oxygen, while the fuel cell 1 uses hydrogen and oxygen produced in the water electrolysis device 7 to generate electricity.

Next, the operation and effects of the regenerative fuel cell system 100 are described below. The hydrogen storage tank 11a and the oxygen storage tank 11b respectively store hydrogen and oxygen under high pressure of 1 to 30 MPa, for example. The hydrogen and oxygen produced in the water electrolysis device 7 are therefore each required to be preliminarily pressurized to a level as high as described above so as to be returned to the hydrogen storage tank 11a and the oxygen storage tank 11b. According to the present embodiment, the pressure of the hydrogen and oxygen produced in the water electrolysis device 7 is regulated as described below.

The first configuration example for pressurization is an arrangement of a first valve coupled to the pipe between the first gas reaction device 9a and the hydrogen storage tank 11a. The switching valve 13a provided in the gas storage unit 40 may be used as the first valve, for example. When the water electrolysis device 7 produces and emits hydrogen, the switching valve 13a is closed so as to pressurize the hydrogen produced in the water electrolysis device 7. The hydrogen is then gradually pressurized in the pipe on the upstream side of the switching valve 13a. The switching valve 13a is opened when the pressure of the hydrogen measured by an additional sensor, for example, is increased more than the pressure in the hydrogen storage tank 11a, so as to introduce the hydrogen produced in the water electrolysis device 7 to the hydrogen storage tank 11a appropriately.

Similarly, a second valve is arranged so as to be coupled to the pipe between the second gas reaction device 9b and the oxygen storage tank 11b. The switching valve 14a provided in the gas storage unit 40 may be used as the second valve, for example. The switching valve 14a is closed and opened in the same manner as the first valve, so as to introduce the oxygen produced in the water electrolysis device 7 to the oxygen storage tank 11b appropriately.

The present embodiment uses, as the first and second valves, the switching valves 13a and 14a already provided in the gas storage unit 40. One aspect of the advantages of such a multiple use is a reduction in size of the device and a promotion of economy, since no additional valve only necessary for pressurization is installed. Another aspect is that a reduction in pressure in the pipes toward the hydrogen storage tank 11a and the oxygen storage tank 11b can further be suppressed when the switching valves 13a and 14a are coupled to the pipes at positions closer to the hydrogen storage tank 11a and the oxygen storage tank 11b. When the emphasis is put only on simple pressurization of hydrogen and oxygen introduced to the hydrogen storage tank 11a and the oxygen storage tank 11b, the arrangements of the first and second valves are not limited to the positions described above. The first and second valves are only required to be coupled to at least the pipes connecting between the water electrolysis device 7 and the hydrogen storage tank 11a and the oxygen storage tank 11b.

The second configuration example for pressurization may be the addition of back-pressure regulation valves capable of regulating primary pressure in the pipes to which the valves are coupled, so as to be used as the first and second valves, instead of the switching valves 13a and 14a already provided. The back-pressure regulation valve as the first valve allows hydrogen to flow downstream when the pressure of the hydrogen measured by an additional sensor, for example, is increased more than the pressure in the hydrogen storage tank 11a, so as to introduce the hydrogen at constant pressure to the hydrogen storage tank 11a. The same is also applied to the case of the second valve.

The opening and closing operations of the switching valves 13a and 14a or the back-pressure regulation valves used as the first valve and the second valve may be either automatic or manual.

The regenerative fuel cell system 100 is thus not required to include a compressor or a booster pump conventionally used for pressurization, so as to achieve a reduction in size and weight.

A crossover phenomenon in which oxygen on the anode 81 side passes through the electrolyte membrane 80 to reach the cathode 82, or hydrogen on the cathode 82 side passes through the electrolyte membrane 80 to reach the anode 81 may be induced if the hydrogen and oxygen would simply be pressurized in the water electrolysis device 7. FIG. 3 shows such a crossover phenomenon by the arrow indicated in white. The crossover phenomenon may lead to a state in which hydrogen presumed to be a product may be accompanied by oxygen or oxygen presumed to be a product may be accompanied by hydrogen. If oxygen accompanying hydrogen enters the hydrogen storage tank 11a or hydrogen accompanying oxygen enters the oxygen storage tank 11b, firing derived from friction or metallic contact, for example, may be caused.

In view of such a phenomenon, the water splitting unit 30 according to the present embodiment includes the two gas reaction devices 9a and 9b. In a case in which the crossover phenomenon is induced to cause oxygen to accompany hydrogen, the first gas reaction device 9a allows the hydrogen to react with the accompanying oxygen to produce water in the first catalyst layer 50. Accordingly, the oxygen accompanying the hydrogen can be removed, or the amount of oxygen can be decreased. The first gas reaction device 9a can only allow the hydrogen to pass through the first permeation layer 51 when the hydrogen having passed through the first catalyst layer 50 is still accompanied by oxygen. The first gas reaction device 9a thus can decrease the oxygen accompanying the hydrogen to a sufficiently small amount so as not to cause firing in case the accompanying oxygen enters the hydrogen storage tank 11a. The hydrogen from which the accompanying oxygen is removed is returned to the hydrogen storage tank 11a with the pressure remaining high.

Similarly, in a case in which the crossover phenomenon is induced to cause hydrogen to accompany oxygen, the second gas reaction device 9b allows the oxygen to react with the accompanying hydrogen to produce water in the second catalyst layer 60. Accordingly, the hydrogen accompanying the oxygen can be removed, or the amount of hydrogen can be decreased. The second gas reaction device 9b can only allow the oxygen to pass through the second permeation layer 61 when the oxygen having passed through the second catalyst layer 60 is still accompanied by hydrogen. The second gas reaction device 9b thus can decrease the hydrogen accompanying the oxygen to a sufficiently small amount so as not to cause firing in case the accompanying hydrogen enters the oxygen storage tank 11b. The oxygen from which the accompanying hydrogen is removed is returned to the oxygen storage tank 11b with the pressure remaining high.

The thickness T of the electrolyte membrane 80 in the water electrolysis device 7 may be increased more than the case of using a compressor, for example, in order to suppress the crossover phenomenon. However, the increase in the thickness T of the electrolyte membrane 80 may lead to a decrease in electrolytic efficiency since a membrane resistance increases. According to the present embodiment, the thickness T of the electrolyte membrane 80 is not required to be increased due to the two gas reaction devices 9a and 9b, which can respectively remove the accompanying oxygen and hydrogen in case the crossover phenomenon is caused, so as to prevent a decrease in electrolytic efficiency.

The first and second reaction parts use the first catalyst layer 50 and the second catalyst layer 60 including catalysts as described above, but may have any configuration that can similarly cause hydrogen and oxygen to react with each other to produce water. The use of catalysts in the first and second reaction parts has the advantage of not needing electricity, a reduction in size and weight, and a low cost.

The present embodiment is illustrated above with the case in which the first catalyst layer 50 and the second catalyst layer 60 are arranged on the downstream side of the first gas-water separator 8a and the second gas-water separator 8b. Since a sufficiently large amount of water has been separated from the hydrogen-mixed gas and the oxygen-mixed gas to be supplied to the first catalyst layer 50 and the second catalyst layer 60, the first catalyst layer 50 and the second catalyst layer 60 can promote the reaction more efficiently.

The present embodiment is illustrated above with the case in which the first gas reaction device 9a includes the first permeation layer 51 in addition to the first catalyst layer 50, and the second gas reaction device 9b includes the second permeation layer 61 in addition to the second catalyst layer 60. The first permeation layer 51 or the second permeation layer 61 is not necessarily included when the amount of the accompanying oxygen or hydrogen is obviously small, for example.

According to the present embodiment, the water produced in the first catalyst layer 50 or the second catalyst layer 60 is transferred to the first water tank 10a or the second water tank 10b and is further transferred to the water electrolysis device 7 so as to be reused. This can conform to the operating principle of the regenerative fuel cell system 100, avoiding loss of efficiency.

As described above, the present embodiment can provide the regenerative fuel cell system having the advantage of ensuring both safety and efficiency.

The first gas-water separator 8a and the second gas-water separator 8b described above are each illustrated with a centrifugal separator which separates water from each mixed gas by centrifugal force. However, the present disclosure may use any means which can separate water from mixed gas.

### (Water electrolysis system)

A water electrolysis system according to an embodiment of the present disclosure is described below. The water electrolysis system according to the present embodiment corresponds to the water splitting unit 30 which can be used as an element of the regenerative fuel cell system 100 described above. The regenerative fuel cell system 100 is illustrated above with the case in which the switching valve 13a included in the gas storage unit 40, which is provided separately from the water splitting unit 30, is used as the first valve for pressurizing hydrogen produced in the water electrolysis device 7. The regenerative fuel cell system 100 is also illustrated above with the case in which the switching valve 14a included in the gas storage unit 40 is used as the second valve for pressurizing oxygen produced in the water electrolysis device 7. The water electrolysis system according to the present embodiment includes the first and second valves so as to independently have the effect of ensuring both safety and efficiency.

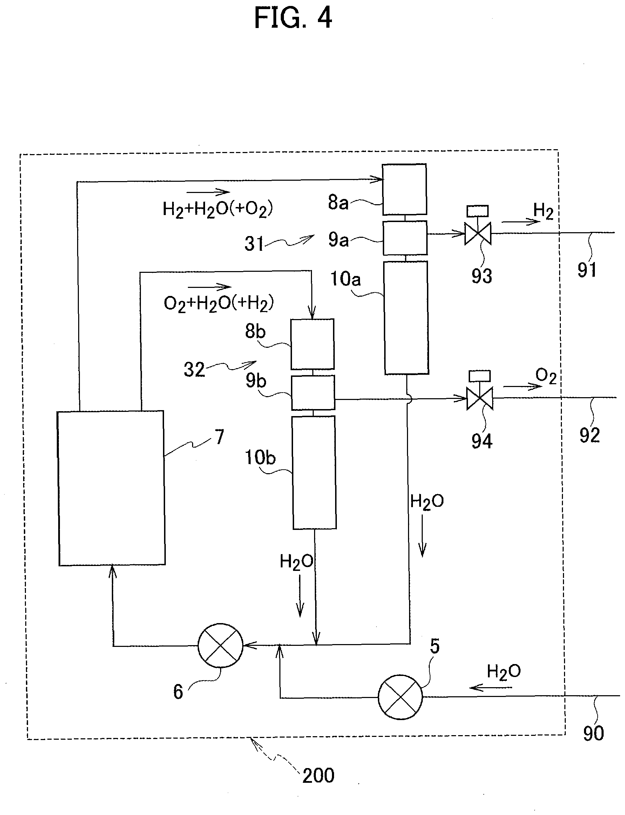

FIG. 4 is a schematic diagram showing a configuration of the water electrolysis system 200 according to the present embodiment. As described above, the principal configuration of the water electrolysis system 200 is substantially the same as that of the water splitting unit 30. The elements in the water electrolysis system 200 which are the same as in the water splitting unit 30 are denoted by the same reference numerals, and overlapping explanations are not repeated below.

The water electrolysis system 200 principally includes a single fluid introduction port and two fluid discharge ports. The water electrolysis system 200 includes, as a fluid introduction port, an introduction port 90 located on the upstream side of the water supply pump 5 so as to externally introduce water. The water is externally introduced through the introduction port 90 by the operation of the water supply pump 5 and is further led to the circulation pump 6. The water electrolysis system 200 includes, as a first fluid discharge port, a first discharge port 91 located on the downstream side of the first gas reaction device 9a so as to discharge, to the outside, finally-remaining hydrogen produced in the water electrolysis device 7 and separated from oxygen accompanying the hydrogen in the first gas reaction device 9a. The water electrolysis system 200 further includes, as a second fluid discharge port, a second discharge port 92 located on the downstream side of the second gas reaction device 9b so as to discharge, to the outside, finally-remaining oxygen produced in the water electrolysis device 7 and separated from hydrogen accompanying the oxygen in the second gas reaction device 9b.

The water electrolysis system 200 also includes the first valve and the second valve having the same functions as the first valve and the second valve in the regenerative fuel cell system 100. The first valve 93 in the water electrolysis system 200 is coupled to a pipe connecting the water electrolysis device 7 and the first discharge port 91. Particularly for hydrogen discharged from the first discharge port 91 and returned to the hydrogen storage tank 11a in the regenerative fuel cell system 100, the first valve 93 is preferably arranged to a position close to the hydrogen storage tank 11a for the same reason as described above. The first valve 93 is preferably coupled to a pipe connecting the first gas reaction device 9a, particularly the first catalyst layer 50 included therein, and the first discharge port 91. Similarly, the second valve 94 in the water electrolysis system 200 is coupled to a pipe connecting the water electrolysis device 7 and the second discharge port 92. Particularly for oxygen discharged from the second discharge port 92 and returned to the oxygen storage tank 11b in the regenerative fuel cell system 100, the second valve 94 is preferably arranged to a position close to the oxygen storage tank 11b. The second valve 94 is preferably coupled to a pipe connecting the second gas reaction device 9b, particularly the second catalyst layer 60 included therein, and the second discharge port 92.

According to the present embodiment, since the amount of oxygen accompanying hydrogen discharged from the first discharge port 91 is small, and the amount of hydrogen accompanying oxygen discharged from the second discharge port 92 is small, the water electrolysis system 200 can ensure safety. The water electrolysis system 200 not only can pressurize hydrogen discharged from the first discharge port 91 and oxygen discharged from the second discharge port 92 by itself, but also can suppress a decrease in electrolytic efficiency in the water electrolysis device 7. The water electrolysis system 200 thus independently has the advantage of achieving both safety and efficiency. The use of the water electrolysis system 200 in a conventional regenerative fuel cell system contributes to fabricating the regenerative fuel cell system having the advantage of achieving both safety and efficiency with less remodeling of elements in another unit.

It should be understood that the present disclosure includes various embodiments which are not disclosed herein. Therefore, the scope of the present disclosure is defined only by the matters according to the claims reasonably derived from the description above.

## Claims

1. A regenerative fuel cell system comprising:
a hydrogen storage unit that stores hydrogen;
an oxygen storage unit that stores oxygen;
a fuel cell that causes the hydrogen from the hydrogen storage unit and the oxygen from the oxygen storage unit to react with each other to generate electricity;
a water electrolysis device that electrolyze water discharged from the fuel cell to produce hydrogen and oxygen;
a first reaction part that causes the hydrogen produced by the water electrolysis device and oxygen accompanying the hydrogen produced by the water electrolysis device to react with each other and return the hydrogen remaining after the reaction to the hydrogen storage unit;
a second reaction part that causes the oxygen produced by the water electrolysis device and hydrogen accompanying the oxygen produced by the water electrolysis device to react with each other and return the oxygen remaining after the reaction to the oxygen storage unit;
a first valve coupled to a pipe connecting the water electrolysis device and the hydrogen storage unit; and
a second valve coupled to a pipe connecting the water electrolysis device and the oxygen storage unit.

2. The regenerative fuel cell system according to claim 1, wherein, in a state in which the water electrolysis device produces the hydrogen, the first valve adjusts a pressure of the hydrogen produced by the water electrolysis device to a level capable of returning the hydrogen to the hydrogen storage unit.

3. The regenerative fuel cell system according to claim 1, wherein, in a state in which the water electrolysis device produces the oxygen, the second valve adjusts a pressure of the oxygen produced by the water electrolysis device to a level capable of returning the oxygen to the oxygen storage unit.

4. The regenerative fuel cell system according to any one of claims 1 to 3, wherein the first reaction part or the second reaction part is a catalyst causing the hydrogen and the oxygen to react with each other to produce water.

5. The regenerative fuel cell system according to any one of claims 1 to 4, further comprising a first permeation layer selectively allowing the hydrogen remaining in the first reaction part to permeate therethrough.

6. The regenerative fuel cell system according to any one of claims 1 to 5, further comprising a second permeation layer including a layer selectively allowing the oxygen remaining in the second reaction part to permeate therethrough and absorbing the hydrogen accompanying the oxygen.

7. The regenerative fuel cell system according to any one of claims 1 to 6, further comprising a first gas-water separator that separates the hydrogen produced by the water electrolysis device from water mixed with the hydrogen produced by the water electrolysis device,
wherein the first reaction part is located on a downstream side of the first gas-water separator.

8. The regenerative fuel cell system according to any one of claims 1 to 7, further comprising a second gas-water separator that separates the oxygen produced by the water electrolysis device from water mixed with the oxygen produced by the water electrolysis device,
wherein the second reaction part is located on a downstream side of the second gas-water separator.

9. The regenerative fuel cell system according to any one of claims 1 to 8, wherein:
the first valve is coupled to a pipe connecting the first reaction part and the hydrogen storage unit; and
the second valve is coupled to a pipe connecting the second reaction part and the oxygen storage unit.

10. The regenerative fuel cell system according to any one of claims 1 to 9, wherein the water electrolysis device electrolyzes water produced in the first reaction part or the second reaction part to further produce hydrogen and oxygen.

11. A water electrolysis system comprising:
an introduction port from which water is externally introduced;
a water electrolysis device that electrolyze the water introduced from the introduction port to produce hydrogen and oxygen;
a first reaction part that causes the hydrogen produced by the water electrolysis device and oxygen accompanying the hydrogen produced by the water electrolysis device to react with each other so as to remove the oxygen;
a first discharge port from which the hydrogen remaining in the first reaction part is discharged outward;
a second reaction part that causes the oxygen produced by the water electrolysis device and hydrogen accompanying the oxygen produced by the water electrolysis device to react with each other so as to remove the hydrogen;
a second discharge port from which the oxygen remaining in the second reaction part is discharged outward;
a first valve coupled to a pipe connecting the water electrolysis device and the first discharge port; and
a second valve coupled to a pipe connecting the water electrolysis device and the second discharge port.

12. The water electrolysis system according to claim 11, wherein, in a state in which the water electrolysis device produces the hydrogen, the first valve pressurizes the hydrogen produced by the water electrolysis device.

13. The water electrolysis system according to claim 11 or 12, wherein, in a state in which the water electrolysis device produces the oxygen, the second valve pressurizes the oxygen produced by the water electrolysis device.

14. The water electrolysis system according to any one of claims 11 to 13, wherein the first reaction part or the second reaction part is a catalyst causing the hydrogen and the oxygen to react with each other to produce water.

15. The water electrolysis system according to any one of claims 11 to 14, further comprising a first permeation layer selectively allowing the hydrogen remaining in the first reaction part to permeate therethrough.

16. The water electrolysis system according to any one of claims 11 to 15, further comprising a second permeation layer including a layer selectively allowing the oxygen remaining in the second reaction part to permeate therethrough and absorbing the hydrogen accompanying the oxygen.

17. The water electrolysis system according to any one of claims 11 to 16, further comprising a first gas-water separator that separates the hydrogen produced by the water electrolysis device from water mixed with the hydrogen produced by the water electrolysis device,
wherein the first reaction part is located on a downstream side of the first gas-water separator.

18. The water electrolysis system according to any one of claims 11 to 17, further comprising a second gas-water separator that separates the oxygen produced by the water electrolysis device from water mixed with the oxygen produced by the water electrolysis device,
wherein the second reaction part is located on a downstream side of the second gas-water separator.

19. The water electrolysis system according to any one of claims 11 to 18, wherein:
the first valve is coupled to a pipe connecting the first reaction part and the first discharge port; and
the second valve is coupled to a pipe connecting the second reaction part and the second discharge port.
